# FASCICULE DE BREVET EUROPEEN

(11) **EP 0 353 158 B1**
(45) Date de publication et mention de la délivrance du brevet: **09.06.1993**
(21) Numéro de dépôt: 89402150.0
(22) Date de dépôt: 28.07.1989
(51) Int. Cl.: F16K 5/06, F16K 41/02, F16J 15/00

(54) **Perfectionnemennts aux dispositifs d'étanchéité des vannes**
Dichtungsanordnung für Ventile
Valve-sealing devices

(30) Priorité: 29.07.1988 FR 8810245
(43) Date de publication de la demande: 31.01.1990
(73) Titulaire: SOCIETE ANONYME MECAFRANCE, F-95310 Saint-Ouen-L'Aumone (FR)
(72) Inventeur: Ventadour, Henri, F-78300 Poissy (FR)
(74) Mandataire: Vander-Heym, Serge

(56) Documents cités:
- EP-A- 0 084 513
- FR-A- 2 402 144
- FR-A- 2 412 017
- FR-A- 2 432 123
- GB-A- 2 062 185
- GB-A- 2 074 294
- US-A- 4 440 380

## Description

La présente invention est relative à des perfectionnements aux dispositifs d'étanchéité des vannes.

Dans l'industrie, on utilise des vannes du genre à boisseau sphérique qui sont interposées sur des tubulures dans lesquelles circule un fluide sous pression.

Si l'étanchéité des éléments statiques (tubulures - corps de vanne ) ne pose pas de problème, il n'en est pas de même au niveau de l'organe de manoeuvre du boisseau qui traverse le corps de la vanne. Jusqu'à présent, une bonne solution au problème de l'étanchéité entre le corps et l'organe précité, était obtenue par un joint du genre presse-étoupe, c'est-à-dire par l'utilisation d'un joint comprimé axialement.

On sait depuis toujours qu'un tel joint n'assure plus une bonne étanchéité au bout d'un certain nombre de manoeuvres et qu'il faut le changer périodiquement.

Parfois,cependant,il arrive que ce joint vieillisse prématurément et qu'une fuite se produise.

Une telle fuite peut,actuellement,avoir des conséquences très graves lorsqu'on sait que dans les tubulures circulent des fluides extrêmement toxiques qu'il faut absolument confiner dans un espace étanche.

Dans ces conditions, il n'est plus possible de se fier aux dispositifs d'étanchéité des vannes actuelles.

Par le document FR-A-2432123 on connaît une vanne selon le préambule de la revendication 1, du type à étanchéité améliorée, comportant un joint écrasé en permanence et dont le comportement est imprévisible en cas de fuite.

La présente invention est remaquable en ce que la vanne comporte un corps renfermant un boisseau dont la rotation est commandée par un organe de manoeuvre traversant le corps, l'étanchéité entre le corps et ledit organe de manoeuvre étant assurée par un presse-étoupe comprimé, ladite vanne comportant également un cylindre fixé sur le corps et logeant un organe d'entraînement lié en rotation à l'organe de manoeuvre et libre de se déplacer axialement à l'intérieur dudit cylindre, notamment sous l'action d'une pression de fluide de fuite, un second organe d'étanchéité étant prévu pour réaliser dans un état comprimé, une étanchéité entre l'organe d'entraînement et le cylindre en cas de fuite de fluide à travers ledit presse-étoupe, caractérisée en ce que le second organe d'étanchéité est constitué par un presse-étoupe interposé librement, c'est-à-dire non comprimé en fonctionnement normal de la vanne, entre un piston prévu à la partie supérieure de l'organe d'entraînement et le fond du cylindre.

En fonctionnement normal, le presse-étoupe de l'invention n'est pas comprimé et ne subit donc pas d'usure.

Si une fuite se produit au niveau du presse-étoupe usuel, la pression du fluide repousse le piston et comprime le second presse-étoupe qui prend alors le relais du premier et s'oppose à toutes fuites vers l'extérieur.

La présente invention sera mieux comprise par la description qui va suivre, faite en se référant au dessin annexé à titre d'exemple indicatif seulement,sur lequel :

La figure 1 est une vue en coupe d'une vanne à boisseau sphérique usuel comportant le dispositif de l'invention.

La figure 2 est une vue partielle analogue à la figure 1 montrant le second presse-étoupe en action.

En se reportant au dessin,on voit que 1 est un corps de vanne usuel comportant un boisseau sphérique 2 dont la rotation est assurée par un organe de manoeuvre 3.

De la façon connue, l'étanchéité entre le corps 1 et l'organe 3 est assurée par un presse-étoupe 4 comprimé de la façon usuelle.

Selon l'invention, l'organe 3 est lié en rotation seulement à un organe d'entraînement 5,ledit organe 3 présentant, par exemple à cet effet, une languette axiale 6 engagée dans une fente axiale 7 de l'organe 5.

L'organe d'entraînement 5 est donc libre de se déplacer axialement à l'intérieur d'un cylindre 8 fixé sur le corps 1 (fixation non représentée).L'étanchéité entre le corps 1 et le cylindre 8 ne pose aucun problème étant donné que l'un ne se déplace pas par rapport à l'autre.

L'organe d'entraînement 5 présente un piston 9 pourvu d'une queue 10 traversant le fond 11 du cylindre 8.

Un presse-étoupe 12 est interposé entre le fond 11 et le piston 9. En fonctionnement normal de la vanne, le presse-étoupe 12 n'est pas comprimé, il n'assure aucune fonction et, de ce fait, il ne subit aucune usure.

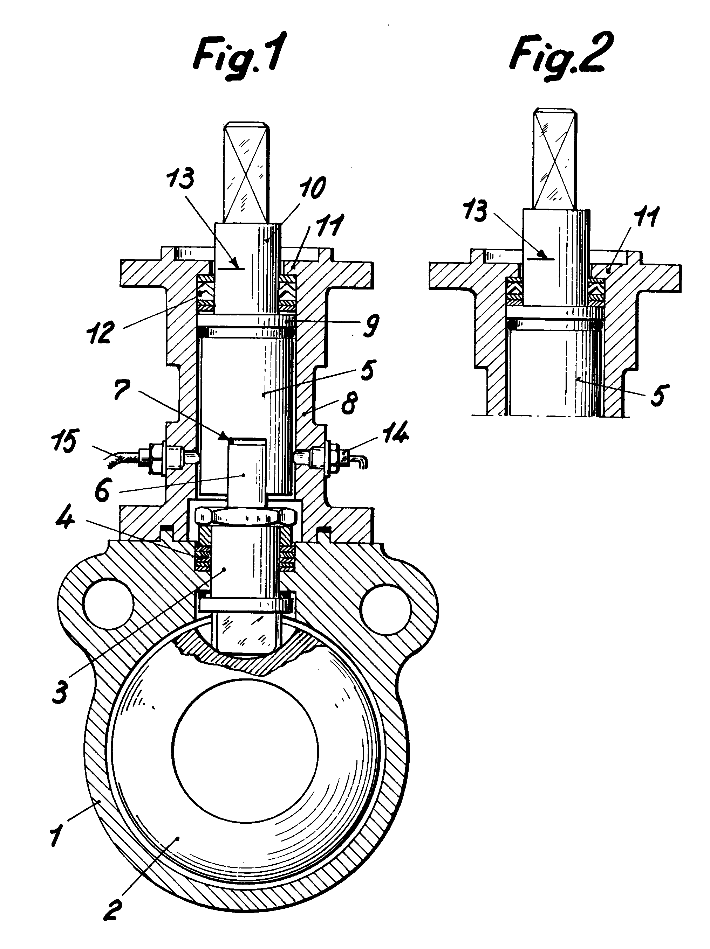

Lorsque par suite de l'usure du presse-étoupe 4,une fuite se produit,le fluide sous pression pénètre dans le cylindre 8 et repousse l'organe d'entraînement 5 qui, par l'entremise du piston 9,comprime le presse-étoupe 12(figure 2).

A ce moment, le presse-étoupe 12 prend le relais de celui 4 et s'oppose à toutes fuites vers l'extérieur.

Naturellement, ce dispositif peut être complété par divers moyens pour alerter le personnel d'entretien que le presse-étoupe 12 est en action et qu'il convient de remettre la vanne en état.

Ainsi, la queue 10 peut présenter un repère gradué 13 dont l'apparition (figure 2) indique cet état défectueux.

La même indication peut être obtenue par un détecteur de pression tel que celui 14. On peut aussi concevoir que le détecteur 14 commande l'envoi, dans le cylindre 8,d'un gaz neutre sous pression par une tubulure 15.

## Revendications

1. Vanne comportant un corps (1) renfermant un boisseau (2) dont la rotation est commandée par un organe de manoeuvre (3) traversant le corps (1), l'étanchéité entre le corps (1) et ledit organe de manoeuvre (3) étant assurée par un presse-étoupe (4) comprimé, ladite vanne comportant également un cylindre (8) fixé sur le corps (1) et logeant un organe d'entraînement (5) lié en rotation à l'organe de manoeuvre (3) et libre de se déplacer axialement à l'intérieur dudit cylindre (8), notamment sous l'action d'une pression de fluide de fuite, un second organe d'étanchéité étant prévu pour réaliser, dans un état comprimé, une étanchéité entre l'organe d'entraînement (5) et le cylindre (8) en cas de fuite de fluide à travers ledit presse-étoupe (4), caractérisée en ce que le second organe d'étanchéité est constitué par un presse-étoupe (12) interposé librement, c'est-à-dire non comprimé en fonctionnement normal de la vanne, entre un piston 9 prévu à la partie supérieure de l'organe (5) et le fond (11) du cylindre (8).

2. Vanne selon la revendication 1, caractérisée en ce que des moyens sont prévus pour détecter le déplacement du piston (9).

## Patentansprüche

1. Ventil, bestehend aus einem Ventilkörper (1) mit darin befindlichem Ventilkegel (2), dessen Drehung durch ein quer durch den Ventilkörper (1) verlaufendes Betätigungselement (3) erfolgt, wobei das Dichtschließen zwischen dem Betätigungselement (3) und dem Ventilkörper (1) durch eine Stopfbuchse (4) erfolgt und das Ventil weiterhin einen fest mit dem Ventilkörper (1) verbundenen Zylinder (8) besitzt, in dem ein drehbar mit dem Betätigungselement (3) verbundenes und im Inneren des Zylinders (8) in Achsrichtung insbesondere unter dem Druck eines abfließenden Mediums frei bewegliches Antriebselement (5) eingebaut ist, wobei ein zweites Dichtungselement vorgesehen ist, um in zusammengepreßtem Zustand beim Ausfließen von Medium durch die Stopfbuchse (4) die Dichtigkeit zwischen dem Betätigungselement (5) und dem Zylinder (8) herzustellen, dadurch gekennzeichnet, daß das zweite Dichtungselement aus einer Stopfbuchse (12) besteht, die sich frei, das heißt ohne Druckbeaufschlagung bei normalem Betrieb des Ventils zwischen einem Kolben (9) im oberen Teil des Betätigungselementes (5) und dem Boden (11) des Zylinders (8) befindet.

2. Ventil nach Patentanspruch 1, dadurch gekennzeichnet, daß Mittel zur Erkennung der Bewegungen des Kolbens (9) vorgesehen sind.

## Claims

1. Valve comprising a body (1) containing a throttle chamber (2) whose rotation is controlled by a controlling device (3) traversing the body (1), imperviousness between the body (1) and said controlling device (3) being ensured by a compressed stuffing box (4), said valve also comprising a cylinder (8) secured to the body (1) and housing a drive member (5) rotary-linked to the controlling device (3) and able to move freely axially inside said cylinder (8), especially under the action of a leakage fluid pressure, a second sealing member being provided so as in a compressed state to embody imperviousness between the drive member (5) and the cylinder (8) should fluid leak through said stuffing box (4), wherein the second sealing member is constituted by a stuffing box (12) inserted freely, that is not compressed during the normal functioning of the valve, between a piston (9) provided at the upper portion of the member (5) and the bottom (11) of the cylinder (8).

2. Valve according to claim 1, wherein means are provided to detect movement of the piston (9).
